Europäisches Patentamt

European Patent Office

Office européen des brevets

(11) Publication number: **0 017 311**
**B1**

(12) **EUROPEAN PATENT SPECIFICATION**

(45) Date of publication of patent specification: **29.05.85**

(21) Application number: **80300323.5**

(22) Date of filing: **04.02.80**

(51) Int. Cl.⁴: **H 02 K 15/02, H 02 K 1/16**

(54) Improvements in electric machines.

(30) Priority: **19.02.79 AU 7736/79**

(43) Date of publication of application:
**15.10.80 Bulletin 80/21**

(45) Publication of the grant of the patent:
**29.05.85 Bulletin 85/22**

(84) Designated Contracting States:
**AT BE CH DE FR GB IT LU NL SE**

(56) References cited:
**DE-A-2 706 717**
**DE-C- 725 610**
**GB-A-1 114 055**
**GB-A-1 530 891**
**US-A-2 845 555**
**US-A-3 188 505**

(73) Proprietor: **Card-O-Matic Pty Ltd.**
**20 McEnvoy Street**
**Waterloo New South Wales, 2017 (AU)**

(72) Inventor: **Stanley, Louis**
**22 Ponyara Road**
**Beverly Hills New South Wales, 2209 (AU)**
Inventor: **Stanley, Jacqualyne**
**22 Ponyara Road**
**Beverly Hills New South Wales, 2209 (AU)**

(74) Representative: **Baillie, Iain Cameron et al**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to electric machines both rotary as in the case of motors and generators, and stationary as in the case of transformers.

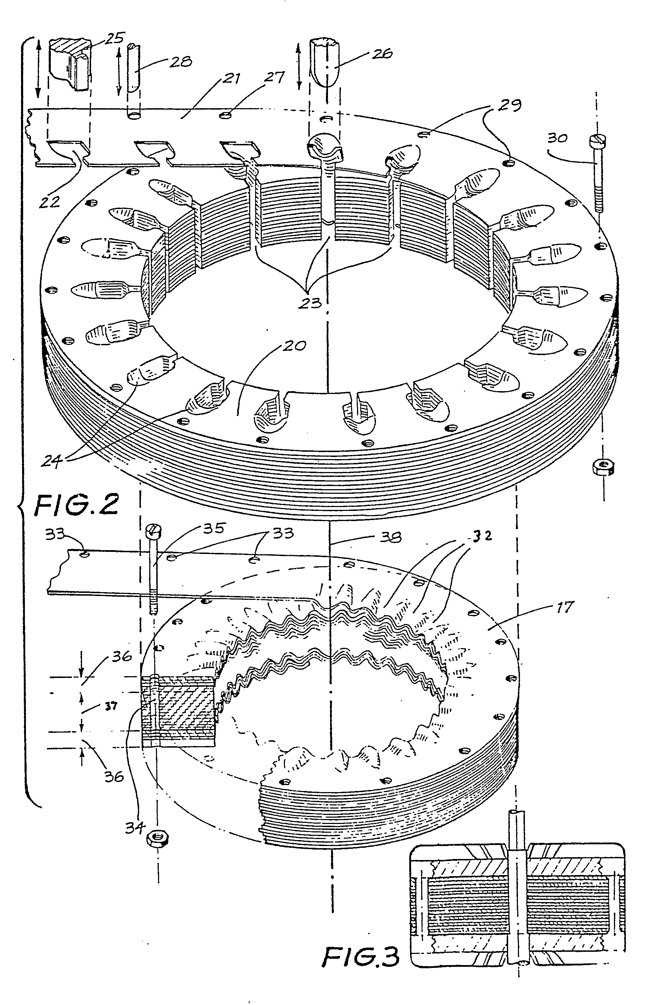

In the manufacture of electric motors, particularly large induction motors, the rotor for example is formed of a plurality of stacked metal discs held together in most instances by a casting. This and other known methods of manufacture contribute considerably to the cost of the article due to the waste in metal and method of assembly. An example of a conventional rotor is depicted in Figure 3 of the attached drawings wherein the core of the rotor is formed of a plurality of stacked discs held together by a cast outer casing which has longitudinally extending arms which pass through the discs. There is a corresponding metal waste in the manufacture of stators.

It is known to manufacture cores by coiling a flat strip about an axis normal to the surface of the strip. GB—C—1 114 055 describes such an arrangement in which there is provided a stator for a dynamo electric machine comprising a helically coiled strip having therein slots which are aligned to constitute the stator slots, troughs being formed in the strip between the inner end of each slot and the outer periphery of the strip, the troughs nesting to locate the slots and being shaped to impart the required bend to the strip.

According to the present invention there is provided a method of forming a core for an electric machine, said method including the steps of:

punching depressions in a metal strip at longitudinally spaced locations along the strip to cause the strip to coil about an axis generally normal to the plane of the strip characterized in that said depressions are formed to have a width extending in the longitudinal direction of the strip, which width decreases towards the radially outer edge of the strip; and in that the method involves simultaneously stacking the coils of the strip so that the depressions are nested by having each depression formed by being punched into the adjacent depression with which it is rested.

The invention also provides a method of manufacturing an electric motor, and a generator using this technique, and extends in the sense of Art 64(2), EPC, to a core, a stator, motor and generator produced by the technique. Various embodiments of the invention are set out in the subclaims.

In the preferred embodiment hereinafter described, the deformations are depressions formed on the radially inner edge of the strip.

A preferred embodiment of the present invention will now be described by way of example with reference to the accompanying drawings, wherein;

Figure 1 is a perspective view of an electric induction motor;

Figure 2 is a perspective schematic view of the forming of the stator and rotor which may be used in the motor of Figure 1;

Figure 3 is a sectioned side elevation of the rotor of the conventional induction rotor;

Figure 4 is a plan view of a partly formed modified rotor which may be used in the machine of Figure 1;

Figure 5 is a plan view of a further partly formed rotor which may be used in a generator;

Figure 6 is a schematic plan view of the simultaneous forming of a rotor and stator;

Figure 7 is a schematic side elevation of the forming of a conical shaped stator; and

Figure 8 is plan view of the stator of Figure 7.

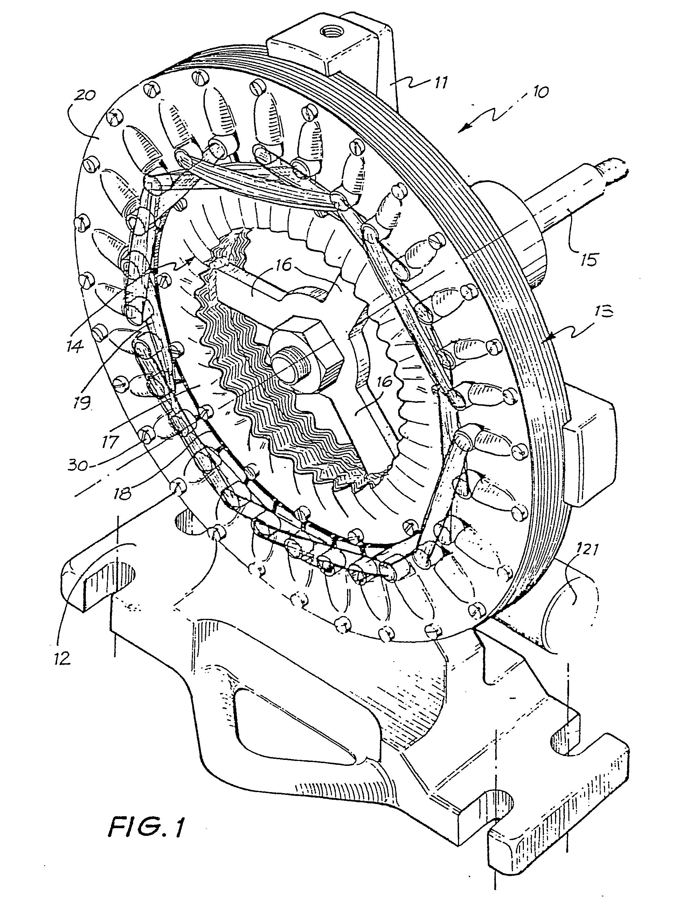

The electric machine 10 of Figure 1 includes a frame 11 attached to a base 12. The frame 11 supports in a fixed position the stator 13 and rotatably supports the rotor 14. The rotor 14 includes a central shaft 15 rotatably supported by a bearing housing 16 of the frame 11. Extending radially outwardly of the shaft 15 are spokes 16 which engage and support the core 17 of the rotor 14. The rotor 14 and stator 13 are separated by an air gap 18. The stator 13 includes field windings 19 and a core 20. The motor 10 is completed by a condenser 21 connected to the field windings in the conventional manner.

Now also with reference to Figure 2, it can be seen that both the rotor core 17 and stator core 20 are formed from stacked metal strip which is coiled to form the generally cylindrically shaped cores 17 and 20. The strip is coiled about an axis extending generally normal to the plane of the strip forming the cores 17 and 20. To achieve this, the strip is crimped at longitudinally spaced locations along the strip so as to have deformed regions which project from the plane of the strip at locations adjacent the radially inner edge of the coiled strip.

The strip 21 used to form the stator core 20 is punched to have apertures 22 which are aligned on the coiled core 20 to form slots 23, additionally the strip 21 is crimped to have cup shaped depressions 24 to enable coiling of the strip 21. The field windings 19 are located within the slots 23. The apertures 22 are formed by punch 25 while the depressions 24 are formed by punch 26. The strip 21 is also formed with apertures 27 by means of punch 28. The apertures 27 are aligned on the core 20 to form passages 29 to receive bolts 30 which hold the coiled strip 21 in position when completely formed. The depressions 24 are aligned on the core 20 and aid in retaining of the strip 21 in position.

The depressions 24 are located at the inner end of the slots 23 so as to extend into the continuous portions of the strip 21 located between the ends of the slots 23 and the radially outer edge of the strip 21. The shape of the depressions 24 is generally cup shaped, however, the width of each depression 24 extending in the direction of the strip is wider adjacent the radially inner edge of the strip 21 in comparison to the width of the depressions 24 adjacent the radially outer edge of the strip 21. To ensure that the core 20 is of a generally cylindrical shape, the depressions 24 must be equally spaced along the strip 21 and must be of the same general shape and depth. To ensure stackability of the separate coils of the strip 21 the depression must be aligned on the core. The radius of the core 20 is determined by the width and depth of the depressions 24 as well as the distance between the depressions 24. The greater the magnitude of the deformations caused by the depressions 24 the smaller the radius of the core 20. Additionally, by decreasing the space between depressions 24, the radius will also be decreased.

The rotor core 17 is formed from the strip 31 which is punched to have depressions 32 adjacent its radially inner edge to enable coiling of the strip 31 about the axis 38. Also punched in the strip 31 are apertures 33 which are aligned on the core 17 to form passages 34 to receive bolts 35 which hold the coiled strip 31 in a coiled position. It would also be advantageous to form the core 17 so as to have two end layers 36 of copper strip and a central layer of steel strip 37. The depressions 32 which enable coiling of the strip are shaped so as to taper towards the radially outer edge of the strips in a similar manner to the depressions 24. The radius of the core 17 is also influenced by the shape and frequency of the depressions 32.

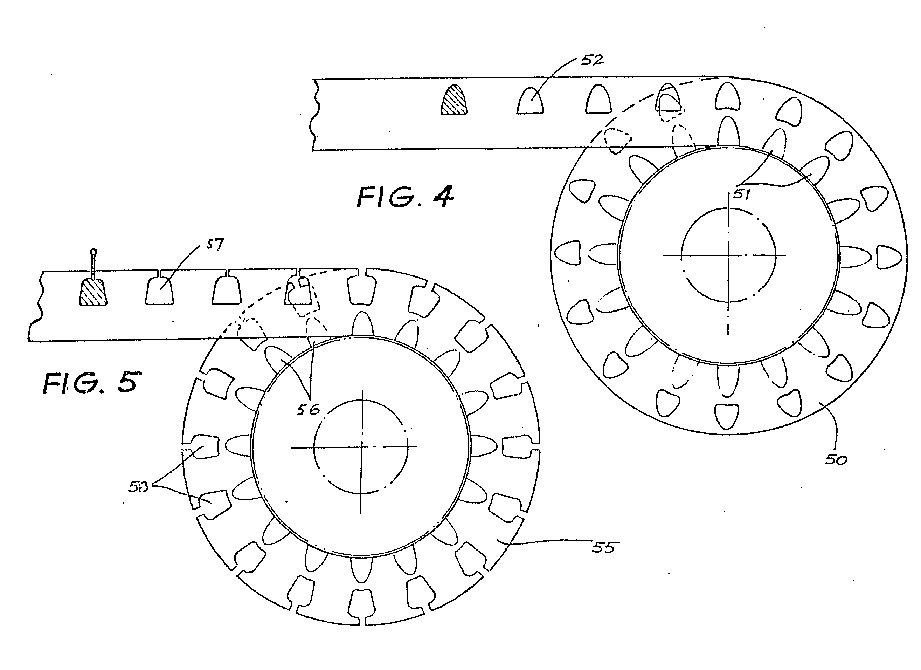

In Figure 4 a modified rotor core 50 is depicted as partly completed. The core 50 has depressions 51 to again enable coiling about the axis of the core 50 and apertures 52. The apertures being provided to mount the core 50 and for bolts to hold the rotor together.

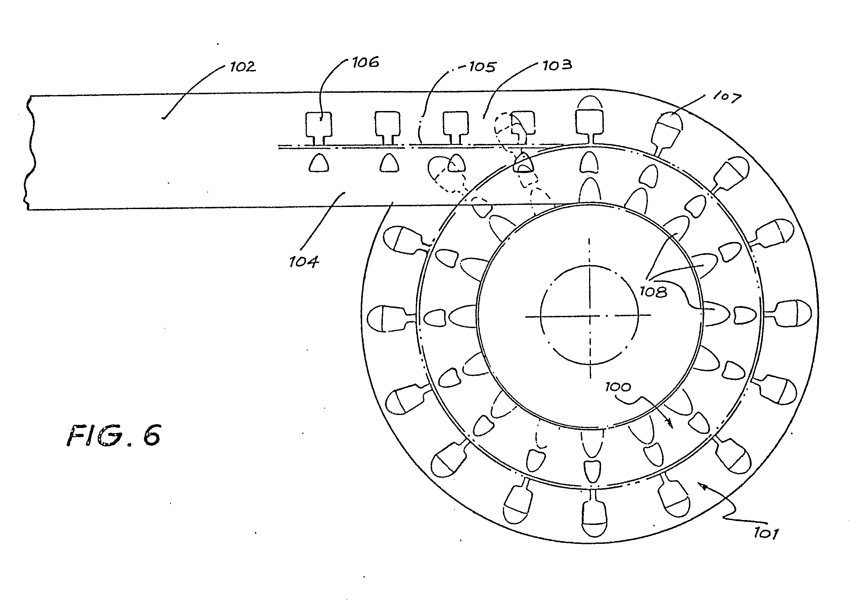

Figure 5 provides a further modified rotor core 55 having radially inner depressions 56, again enabling the core 55 to be coiled, and apertures 57 which align on the core 55 to form longitudinally extending slots 58 on the radially outer peripheral surface of the core 55. This rotor 55 is to be used in a generator by locating armature winding in the slots 58.

Now with reference to Figure 6, there is depicted the simultaneous form of a rotor core 100 and its accompanying stator core 101. Both cores 100 and 101 are formed from the metal strip 102 which is divided into two substrips 103 and 104. The strip 102 is divided by penetration of a punch, not depicted, to form the slot 105. Also the apertures 106 are punched to form slots on the radially inner peripheral surface of the core 101 within which the field windings are located. The depressions 107 and 108 are formed in the substrips 103 and 104 to again enable coiling of the sub-strips 103 and 104 to form the cores 101 and 100 respectively.

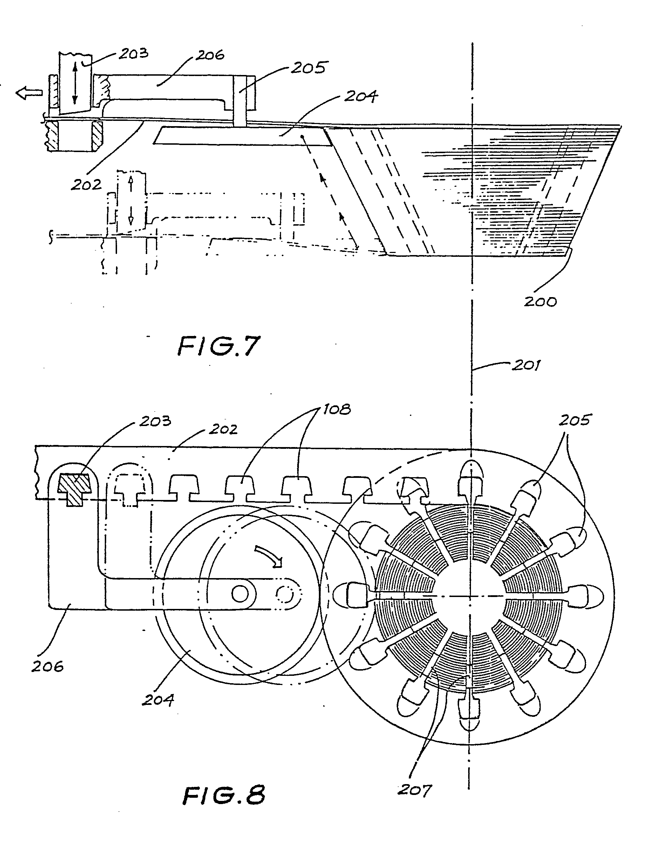

Now with reference to Figures 7 and 8 there is depicted a core 200 being coiled about an axis 201 so as to form a truncated cone defined by the stacked coiling of strip 202 to form a spiral about the axis 201. Again the axis 201 extends generally normal to the strip 202 when coiled on the core 200, however, to enable the formation of a truncated cone, the depressions 205 formed adjacent the radially inner peripheral surface of the core 200 must be spaced from each other by a distance which increases from the smaller radius end of the core 200 to the larger radius end of the core 200. By spaced it is meant that the depressions 205 are spaced longitudinally along the strip 202. Still further, in some instances it is necessary, in order to adjust the bending radius of the strip 202, to vary the depth of the depressions 205 from deep depressions adjacent the smaller radius end of the core 200 to shallower depressions adjacent the larger radius end of the core 200.

In Figure 7 there is schematically depicted a punch 203 which is moved leftward in order to space apertures 108 formed by the punch 203 at progressively larger intervals along the strip 202 as the diameter of the core 200 increases. The punch 203 is moved leftward by cam 204 engaging the radially outer peripheral surface of the core 200. The cam 204 is rotatably attached to arm 206 by shaft 205. The punch which forms the depressions 205 is not depicted, however, it also would have to move in a leftward direction similar to that of punch 203. As explained in the above paragraph, the depth of the depressions 205 formed would be governed by the travel of the punch which form them.

It should be appreciated that although there is described with reference to Figures 7 and 8 a conical rotor, there could simultaneously be formed a stator of complementary shape to thereby provide an air gap between the stator and rotor which is of a greater length in comparison to conventional motors, since the air gap is at an angle to the axis 201 of the core.

Although there is only described above the manufacture of an induction electric motor, it will be appreciated by those skilled in the art that the above technology is also applicable to stationary electric machines such as transformers, as well as other rotary machines such as generators and other non-described electric motors.

Additionally the deformations are only described as depressions, however the deformations could be formed by slots or even by compressing the strip at appropriate intervals to cause the metal of the strip to flow. In this latter instance, the areas subjected to the compressive force would be located toward the radially outer edge of the strip. Despite the various methods of forming the deformations, the above described depressions provide particular advantages in that the strip coils under the strain created in the strip without any other substantialy coiling forces. Also the depressions aid in retaining the strip in a coiled position.

**Claims**

1. A method of forming a core (17, 20) for an electric machine, said method including the steps of:

punching depressions (32, 24) in a metal strip (31, 21) at longitudinally spaced locations along the strip (31, 21) to cause the strip (31, 21) to coil about an axis generally normal to the plane of the strip characterized in that said depressions (32, 24) are formed to have a width extending in the longitudinal direction of the strip (31, 21), which width decreases towards the radially outer edge of the strip (31, 21); and in that the method involves simultaneously stacking the coils of the strip (31, 21) so that the depressions (32, 24) are nested by having each depression (32, 24) formed by being punched into the adjacent depression (32, 24) with which it is rested.

2. The method of claim 1, wherein said depressions have a width which decreases from the radially inner edge so as to be generally V-shaped.

3. The method of claim 2 wherein the depressions are equally spaced along the strip so that the core is substantially of cylindrical shape.

4. The method of claim 2 wherein the spaces between the depressions continually increase in length to thereby cause said strip to follow a spiral path and so that said core is formed to have a generally frusto-conical shape.

5. The method of claim 1, 2, 3 or 4 further including the step of punching holes (22, 57) in the strip at spaced locations along the strip so that the holes align on the coiled core to form longitudinally extending slots on a peripheral surface of the core.

6. The method of claim 5 wherein the holes are punched on the radially inner edge of the strip so as to form the slots on the radially inner peripheral surface of the core.

7. The method of claim 5 wherein the holes punched on the radially outer peripheral surface of the strip so as to form the slots on the radially outer peripheral surface of the core.

8. A method of manufacturing an electric motor, said motor including forming a stator having a core manufactured by the method of claim 6 and further including the step of locating field windings in the slots, and also including forming a rotor having a core manufactured by the method of claim 1, 2, 3, or 4.

9. A method of manufacturing a generator, said method including forming a stator having a core manufactured by the method of claim 6, and forming a rotor having a core manufactured by the method of claim 7.

10. The method of claim 8 or 9 wherein the rotor core and stator core are formed from a single metal strip, which single strip is divided longitudinally to form the rotor and stator cores.

## Patentansprüche

1. Verfahren zum Herstellen eines Kerns (17, 20) für eine elektrische Maschine mit folgenden Schritten:

In ein Metallband (31, 21) werden an in längs des Bandes in Abständen voneinander angeordneten Stellen Vertiefungen (32, 24) eingestanzt, so daß sich das Ban (31, 21) schraubenförmig um eine zu seiner Ebene allgemein normale Achse windet, dadurch gekennzeichnet, daß die genannten Vertiefungen (32, 34) mit einer in der Längsrichtung des Bandes (31, 21) gemessenen Breite ausgebildet werden, die zu dem radial äußeren Rand des Bandes (31, 21) hin zunimmt, und daß gleichzeitig die von dem Band (31, 21) gebildeten Windungen so gestapelt werden, daß die Vertiefungen (32, 24) ineinandergeschachtelt sind, wobei jede Vertiefung (32, 24) in die benachbarte und sie aufnehmende Vertiefung (32, 24) hineingestanzt wird.

2. Verfahren nach Anspruch 1, dadurch gekennzeichnet, daß die Breite der Vertiefungen von dem radial inneren Rande her abnimmt, so daß die Vertiefungen allgemein V-förmig sind.

3. Verfahren nach Anspruch 2, dadurch gekennzeichnet, daß die Vertiefungen längs des Bandes in gleichen Abständen angeordnet sind, so daß der Kern im wesentlichen zylindrisch ist.

4. Verfahren nach Anspruch 2, dadurch gekennzeichnet, daß die Länge der Zwischenräume zwischen den Vertiefungen zunimmt, so daß das Band eine Spiralform annimmt und der Kern allgemein kegelstumpfförmig ausgebildet wird.

5. Verfahren nach Anspruch 1, 2, 3 oder 4, dadurch gekennzeichnet, daß aus dem Band an in dessen Längsrichtung in Abständen voneinander angeordneten Stellen Löcher (22, 57) ausgestanzt werden, die in dem wendelförmigen Kern miteinander fluchten, so daß auf einer Umfangsfläche des Kerns Schlitze vorhanden sind, die sich in der Längsrichtung erstrecken.

6. Verfahren nach Anspruch 5, dadurch gekennzeichnet, daß die Löcher am radial inneren Rand des Bandes ausgestanzt werden, so daß die Schlitze in der radial inneren Umfangsfläche des Kerns ausgebildet werden.

7. Verfahren nach Anspruch 5, dadurch gekennzeichnet, daß die Löcher aus der radial äußeren Umfangsfläche des Bandes ausgestanzt werden, so daß die Schlitze in der radial äußeren Umfangsfläche des Kerns ausgebildet werden.

8. Verfahren zum Herstellen eines Elektromotors, in dem ein Ständer hergestellt wird, der einen Kern hat, der in dem Verfahren nach Anspruch 6 hergestellt worden ist, wobei Feldwicklungen in den Schlitzen angeordnet werden, und ein Läufer hergestellt wird, der einen in dem Verfahren nach Anspruch 1, 2, 3 oder 4 hergestellten Kern besitzt.

9. Verfahren zum Herstellen eines Generators, in dem ein Ständer hergestellt wird, der einen in dem Verfahren nach Anspruch 6 hergestellten Kern besitzt, und ein Läufer hergestellt wird, der einen in dem Verfahren nach Anspruch 7 hergestellten Kern besitzt.

10. Verfahren nach Anspruch 8 oder 9, dadurch gekennzeichet, daß der Läuferkern und der Ständerkern aus einem einzigen Metallband hergestellt werden, das zur Bildung des Läufer- und des Ständerkerns längsgeteilt wird.

## Revendications

1. Procédé de formation d'un noyau (17, 20) pour une machine électrique, ce procédé comprenant les étapes consistant à: poinçonner des dépressions (32, 24) dans une bande métallique (31, 21) en des emplacements espacés longitudinalement le long de la bande (31, 21) pour faire que la bande s'enroule autour d'un axe de façon générale normal au plan de la bande, caractérisé en ce que les dépressions (32, 24) sont formées pour avoir une largeur s'étendant dans la direction longitudinale de la bande (31, 21), laquelle largeur diminue vers le bord radialement extérieur de la bande (31, 21); et en ce que le procédé comprend en même temps l'empilage des spires de la bande (31, 21), en sorte que les dépressions (32, 24) s'emboîtent, chaque dépression (32, 24) étant formée en étant poinçonnée dans la dépression (32, 24) adjacente dans laquelle elle repose.

2. Procédé suivant la revendication 1, dans lequel les dépressions ont une largeur qui diminue à partir du bord radialement intérieur, de façon à être en forme générale de V.

3. Procédé suivant la revendication 2, dans lequel les dépressions sont également espacées le long de la bande, en sorte que le noyau soit sensiblement de forme cylindrique.

4. Procédé suivant la revendication 2, dans lequel les espaces entre les dépressions augmentent continuellement de longueur pour faire ainsi que la bande suive un trajet en spirale et de façon que ledit noyau soit formé pour avoir une forme de façon générale tronconique.

5. Procédé suivant la revendication 1, 2, 3 ou 4, comprenant l'étape consistant à poinçonner des trous (22, 57) dans la bande, en des endroits espacés le long de la bande, en sorte que les trous s'alignent sur le noyau enroulé pour former des fentes s'étendant longitudinalement sur une surface périphérique du noyau.

6. Procédé suivant la revendication 5, dans lequel les trous sont poinçonnés sur le bord radialement intérieur de la bande, en sorte de former les fentes sur la surface périphérique radialement intérieure du noyau.

7. Procédé suivant la revendication 5, dans lequel les trous sont poinçonnés sur la surface périphérique radialement extérieure de la bande, en sorte de former les fentes sur la surface périphérique radialement extérieure du noyau.

8. Procédé de fabrication d'un moteur électrique, ce moteur (lire procédé) comprenant la formation d'un stator ayant un noyau fabriqué par le procédé selon la revendication 6, et comprenant encore l'étape consistant à loger des enroulements de champ dans les fentes, et comprenant aussi la formation d'un rotor ayant un noyau fabriqué par le procédé selon la revendication 1, 2, 3 ou 4.

9. Procédé de fabrication d'un générateur, le procédé comprenant la formation d'un stator ayant un noyau fabriqué par le procédé selon la revendication 6, et la formation d'un rotor ayant un noyau fabriqué par le procédé selon la revendication 7.

10. Procédé suivant la revendication 8 ou 9, dans lequel le noyau du rotor et le noyau du stator sont formés à partir d'une bande métallique unique, laquelle bande unique est divisée longitudinalement pour former les noyaux du rotor et du stator.

FIG.1

FIG.2

FIG.3

FIG. 4

FIG. 5

51

50

52

55

53

56

57

0017311

FIG. 6

FIG.7

FIG.8